# EUROPÄISCHE PATENTANMELDUNG

(11) **EP 2 548 426 A1**
(43) Veröffentlichungstag der Anmeldung: **23.01.2013**
(21) Anmeldenummer: 12401152.9
(22) Anmeldetag: 16.07.2012
(51) Int. Cl.: A01B 61/04

(54) **Aufhängungsvorrichtung**

(30) Priorität: 22.07.2011 DE 102011052054
(71) Anmelder: Amazonen-Werke H. Dreyer GmbH & Co. KG, 49205 Hasbergen (DE)
(72) Erfinder: Andrich, Robert, 04177 Leipzig (DE); Brockhausen, Jens, 04109 Leipzig (DE); Döring, Ralf, 04416 Markkleeberg (DE); Randasch, Holger, 15537 Grünheide OT Kienbaum (DE); Rillich, Annett, 04460 Kitzen (DE); Straßberger, Rocco, 04435 Schkeuditz OT Glesien (DE)

(57) **Zusammenfassung**

Aufhängungsvorrichtung für einer Landmaschine zur Aufhängung eines Maschinenteils, insbesondere eines Bodenbearbeitungswerkzeuges, mit zumindest einem das Maschinenteil tragenden Schwenkarm (5) sowie einem sich vorzugsweise quer zur Arbeitsrichtung erstreckenden Schwenkarmträger (2), an dem der Schwenkarm (5) mit einem Lagerkörper (6) schwenkbar gelagert ist, wobei der Lagerkörper (6) den Schwenkarmträger (2) umgreift und zwischen dem Lagerkörper (6) und den davon umgriffenen Abschnitt des Schwenkarmträgers (2) zumindest ein elastisches Lagerelement (7) vorgesehen ist, das sich mit seiner Längsachse im Wesentlichen parallel zu der Schwenkachse des Schwenkarmes (5) und der Längsachse des Schwenkträgers (2) erstreckt und durch Schwenkbewegungen des Schwenkarmes (5) eine zumindest teilweise Verformung erfährt. Um eine preiswertere Ausgestaltung der elastischen Lagerelemente (7) zu schaffen, welche jedoch nicht aus der Lagerung heraus wandern, ist vorgesehen, dass auf der Oberfläche des elastischen Lagerelementes (7) im Bereich des Lagerkörpers (6) zumindest eine Erhebung (9, 10, 11, 12, 13, 14, 15, 16, 17, 18) angeordnet ist.

## Beschreibung

Die Erfindung betrifft eine Aufhängungsvorrichtung gemäß des Oberbegriffes des Patentanspruches 1.

Eine derartige Aufhängungsvorrichtung ist beispielsweise durch die EP 1 880 590 B1 bekannt. Bei dieser Aufhängungsvorrichtung sind die elastischen Lagerelemente gegenüber den seitlichen Bereichen im mittleren Bereich eingeschnürt ausgebildet. Diese Ausgestaltung hat sich in der Praxis bewährt, weil hierdurch erreicht wird, dass die elastischen Lagerelemente nicht aus der Lagerung herauswandern.

Die Herstellung dieser mittig eingeschritten Lagerelemente ist jedoch relativ kostenaufwändig.

Der Erfindung liegt die Aufgabe zu Grunde, eine preiswertere Ausgestaltung der elastischen Lagerelemente zu schaffen, welche ebenfalls nicht aus der Lagerung herauswandern.

Diese Aufgabe wird erfindungsgemäß dadurch gelöst, dass auf der Oberfläche des elastischen Lagerelementes im Bereich des Lagerkörpers zumindest eine Erhebung angeordnet ist.

Infolge dieser Maßnahme wird durch die an dem elastischen Lagerelement angeordnete Erhebung ein besseres verklemmen des Lagerelementes in dem Lagerkörper durch die Erzeugung eines erhöhten Druck und der daraus resultierenden höheren Reibung erreicht. Dieses wirkt dem möglichen Herauswandern der Lageelemente aus dem Lagerkörper entgegen.

In einer einfachen Ausgestaltung der Erfindung ist vorgesehen, dass die Erhebung als zumindest eine ringförmige Erhebung auf der Oberfläche des elastischen Lagerelementes ausgebildet ist. Diese ringförmige Erhebung lässt sich in einfacher Weise, z.B. durch Stauchung während des Herstellungsprozesses des Lagerelementes in einfacher Weise erzeugen.

In einer Ausgestaltung der Erfindung ist vorgesehen, dass die ringförmige Erhebung als zumindest ein auf dem Lagerelement angeordnetes oder aufgeschobenes Ringelement, vorzugsweise O-Ring ausgebildet ist. Bei dieser Variante der Erfindung wird einfach ein Ringelement auf das Lagerelement aufgeschoben, welches die Erhebung erzeugt.

Weiterhin ist erfindungsgemäß vorgesehen, dass die ringförmige Erhebung als mit dem Lagerelement einstückig verbundenes und aus der Oberfläche des Lagerelementes herausragendes Ringelement ausgebildet ist.

In einigen Einsatzfällen ist es sinnvoll, dass eine Vielzahl von ringförmigen Erhebungen nebeneinander auf der Oberfläche des Lageelementes angeordnet sind. Infolge dieser Maßnahme lässt sich der Widerstand gegen das Herauswandern des Lagerelementes aus dem Lagerkörper in einfacher und anpassbarer Weise erhöhen.

In einer Ausgestaltung der Erfindung ist vorgesehen, dass die Erhebungen auf der Oberfläche des Lagerelementes streifenförmig ausgebildet sind.

In einer anderen Ausgestaltung der Erfindung ist vorgesehen, dass das die Erhebungen auf der Oberfläche des Lagerelementes punktartig ausgebildet sind.

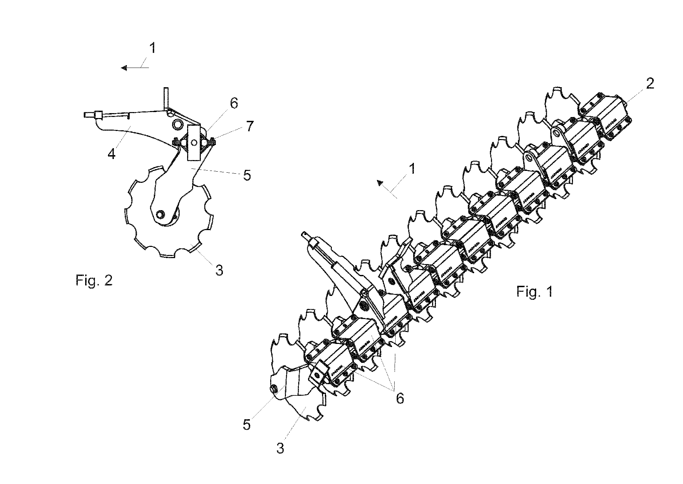

In einer weiteren Ausgestaltung der Erfindung ist vorgesehen dass das die Erhebungen gitternetzartig ausgebildet sind. Weitere Einzelheiten der Erfindung sind der Beispielsbeschreibung und den Zeichnungen zu entnehmen. Hierbei zeigen
- Fig. 1: die an einem Schwenkarmträger mittels der Aufhängungsvorrichtungen angeordneten als Scheiben ausgebildeten Bodenbearbeitungswerkzeuge einer Scheibenegge in perspektivischer Darstellung,
- Fig. 2: die an einem Schwenkarmträger mittels der Aufhängungsvorrichtungen angeordneten als Scheiben ausgebildeten Bodenbearbeitungswerkzeuge einer Scheibenegge gemäß Fig. 1 in Seitenansicht,

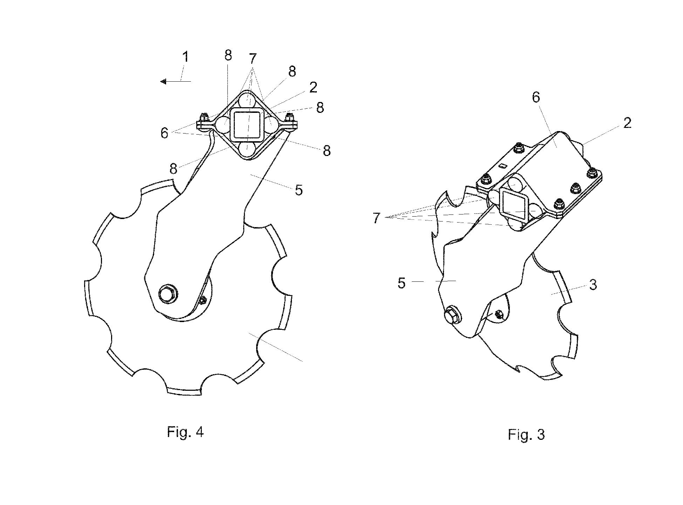

- Fig. 3: eine an einem Schwenkarmträger mittels einer Aufhängungsvorrichtung angeordnete und als Scheibe ausgebildete Bodenbearbeitungswerkzeug einer Scheibenegge in perspektivischer Darstellung und vergrößertem Maßstab,
- Fig. 4: das an einem Schwenkarmträger mittels einer Aufhängungsvorrichtung angeordnete und als Scheibe ausgebildete Bodenbearbeitungswerkzeug einer Scheibenegge in Seitenansicht gemäß Fig. 3,
- Fig. 5: der an einem Schwenkarmträger anzuordnende halbe Lagerkörper gemäß den Fig. 1 bis 4 mit zwei elastischen Lagerelementen in perspektivischer Darstellung,
- Fig. 6: ein elastisches Lagerelement gemäß der Fig. 5 in Vorderansicht,
- Fig. 7: das elastische Lagerelement gemäß der Fig. 6 in perspektivischer Darstellung,
- Fig. 8: ein weiteres elastisches Lagerelement in Vorderansicht,
- Fig. 9: das elastische Lagerelement gemäß der Fig. 8 in perspektivischer Darstellung,
- Fig. 10: ein weiteres elastisches Lagerelement in Vorderansicht,
- Fig. 11: das elastische Lagerelement gemäß der Fig. 10 in perspektivischer Darstellung,
- Fig. 12: ein weiteres elastisches Lagerelement in Vorderansicht,
- Fig. 13: das elastische Lagerelement gemäß der Fig. 12 in perspektivischer Darstellung,
- Fig. 14: ein weiteres elastisches Lagerelement in Vorderansicht,
- Fig. 15: das elastische Lagerelement gemäß der Fig. 14 in perspektivischer Darstellung,
- Fig. 16: ein weiteres elastisches Lagerelement in Vorderansicht und
- Fig. 17: das elastische Lagerelement gemäß der Fig. 16 in perspektivischer Darstellung.

An einem nicht dargestellten Rahmen einer als Kurzscheibenegge ausgebildeten Landmaschine sind zwei quer zur Fahrtrichtung 1 verlaufende Schwenkarmträger 2, von denen jedoch nur einer dargestellt ist, beabstandet hintereinander angeordnet. Der als Schwenkarmträger 2 ausgebildete Querbalken zur Aufhängung jeweils eines Maschinenteils, welches als Scheibe 3 ausgestaltetes Bodenbearbeitungswerkzeug ausgebildet ist, ist mittels geeigneter Zwischenelemente 4 an dem Maschinenrahmen angeordnet. Das als Scheibe 3 ausgebildete Bodenbearbeitungswerkzeug ist jeweils mittels eines Schwenkarmes 5 über einen Lagerkörper 6 an dem Schwenkarmträger 2 befestigt. Der Lagerkörper 6 umgreift den Querbalken 2. Zwischen dem Lagerkörper 6 und dem davon umgriffenen Abschnitt des Querbalkens 2 sind vier elastische Lagerelemente 7 angeordnet. Die elastischen Lagerelemente 7 sind beispielsweise als dicke gummischnurartige langgestreckte Wülste ausgebildet und erstrecken sich mit ihrer Längsachse parallel zu der Schwenkachse des Schwenkarmes 5 und der Längsachse des Querbalkens 2. Der Schwenkarm 5 mit dem Bodenbearbeitungswerkzeug 3 und dem Lagerkörper 6 können aufgrund der elastischen Lagerelementes 7 um die Längsachse des Querbalkens 2 gegen die Kraft der Lagerelementes 7, welche durch die Verformung der elastischen Lagerelemente7 entsteht, schwenken.

Außerdem kann der Schwenkarm 5 mit dem Bodenbearbeitungselement 3 im begrenzten Umfang ebenfalls durch elastische Verformung der elastischen Lagerelemente 7 seitlich ausweichen. Die Lagerkörper 6, welche den Schwenkarmträger 2 umgreifen, weisen einen vierkantförmigen Querschnitt auf. Ebenfalls weist der Schwenkarmträger 2 ein vierkantförmigen Querschnitt auf, wobei der Lagerkörper gegenüber dem Profil der Schwenkarmträger 2, in der Ausgangsstellung, um 45° verdreht ist, so dass sich der Zwischenraum zwischen dem Lagerkörper 6 und dem davon umgriffenen Schwenkarmträger 2 in vier Lagerelementekammern 8 untergliedert. In diesen vier Lagerelementekammern 8 ist jeweils ein elastisches Lagerelement 7 angeordnet.

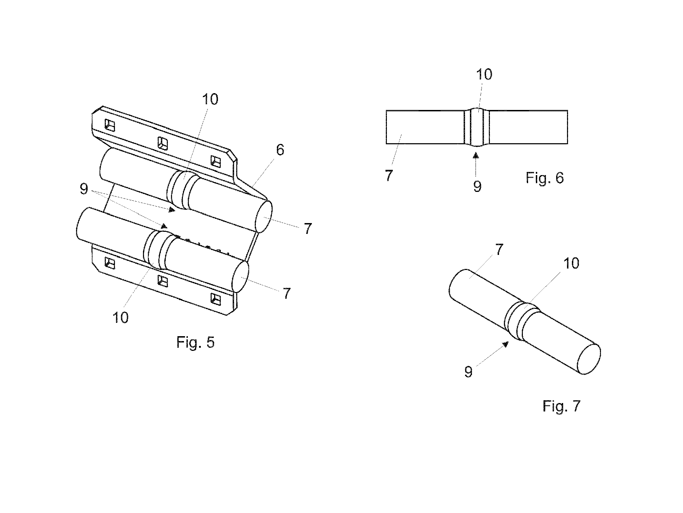

Gemäß den Fig. 5 bis 7 ist jeweils auf der Oberfläche des elastischen Lagerelementes 7 im Bereich des Lagerkörpers 6 eine Erhebung 9 angeordnet. Diese Erhebung 9 ist als eine ringförmige Erhebung auf der Oberfläche des elastischen Lagerelementes 7 ausgebildet. Diese ringförmige Erhebung 9 ist als mit dem Lagerelement 7 einstückig verbundenes und aus der Oberfläche des Lagerelementes 7 herausragendes Ringelement 10 ausgebildet.

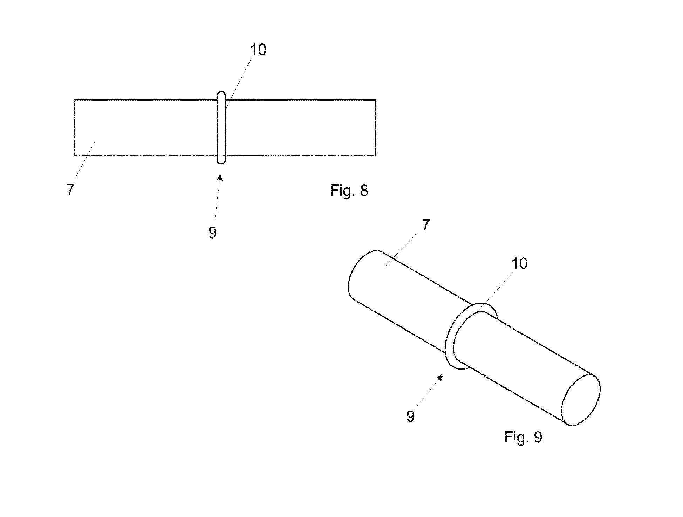

Gemäß den Fig. 8 und 9 ist jeweils auf der Oberfläche des elastischen Lagerelementes 7 im Bereich des Lagerkörpers 6 eine Erhebung 11 angeordnet. Diese ringförmige Erhebung 11 ist als ein auf das Lagerelement 7 aufgeschobenes Ringelement, nämlich einem O-Ring 12 ausgebildet.

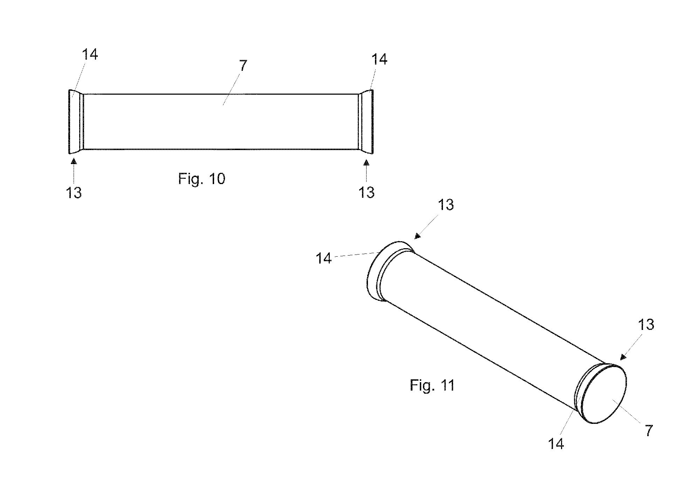

Gemäß den Fig. 10 und 11 sind jeweils auf der Oberfläche des elastischen Lagerelementes 7 im Bereich des Lagerkörpers 6 zwei Erhebungen 13 angeordnet. Hierbei ist jeweils eine Erhebung 13 am äußersten Ende des Lagerelementes 7 angeordnet. Die Erhebungen 13 sind als ringförmige Erhebung 14, die aus der Oberfläche des elastischen Lagerelementes 7 herausragen ausgebildet. Die Erhebungen 13 sind einstückig mit der Oberfläche des Lagerelementes 7 verbunden.

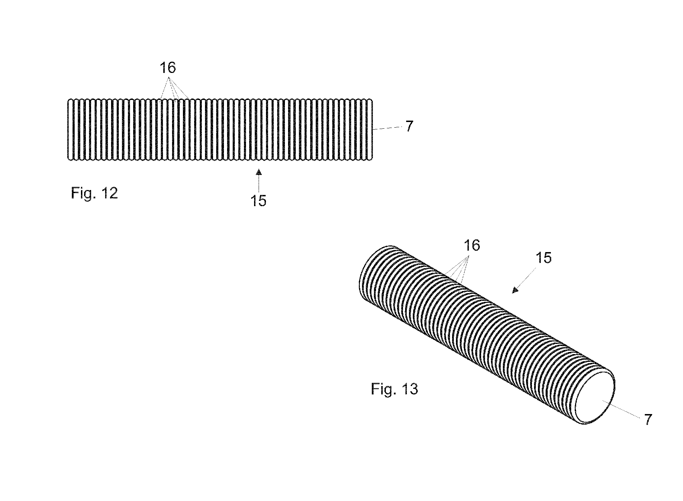

Gemäß den Fig. 12 und 13 sind jeweils auf der Oberfläche des elastischen Lagerelementes 7 im Bereich des Lagerkörpers 6 eine Vielzahl von Erhebungen 15 nebeneinander angeordnet angeordnet. Diese Erhebungen 15 sind als ringförmige Erhebungen 16 auf der Oberfläche des elastischen Lagerelementes 7 ausgebildet.

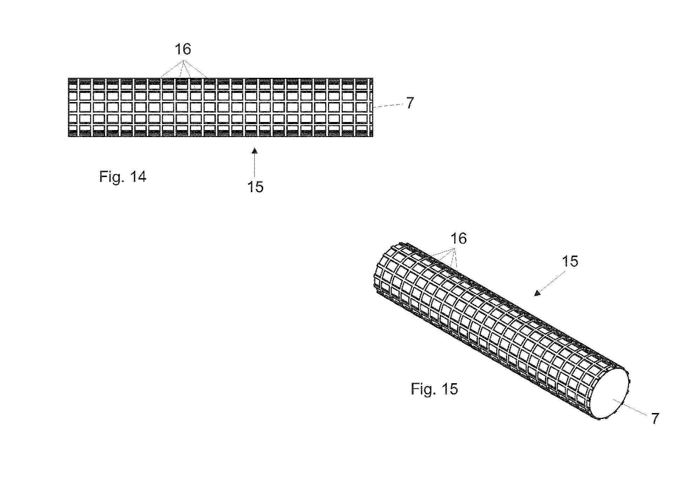

Gemäß den Fig. 14 und 15 sind jeweils auf der Oberfläche des elastischen Lagerelementes 7 im Bereich des Lagerkörpers 6 gitternetzartig ausgebildete Erhebungen 17 angeordnet.

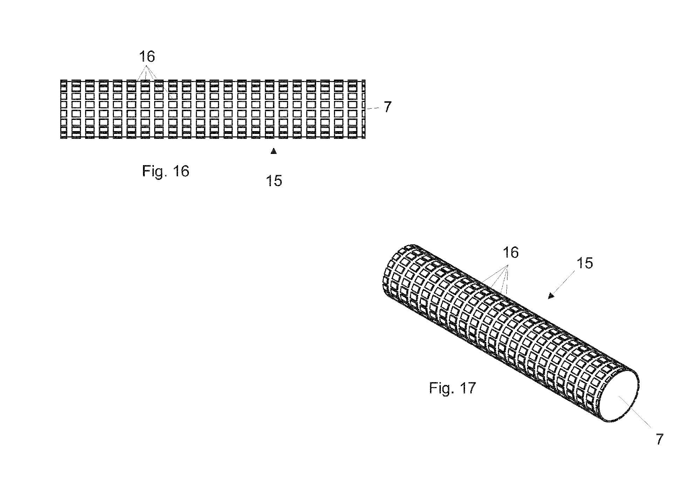

Gemäß den Fig. 16 und 17 sind jeweils auf der Oberfläche des elastischen Lagerelementes 7 im Bereich des Lagerkörpers 6 punktartig ausgebildete Erhebungen 18 angeordnet.

Durch alle Erhebungen 9, 10, 11, 12, 13, 14, 15, 16, 17, 18, wie vorbeschriebenen sind, die auf der Oberfläche eines Lagerelementes 7 angeordnet sind, wird erreicht, dass die Lagerelemente 7 nicht oder nur sehr schwierig aus dem Lagerkörper 6 herauswandern können. Diese Erhebungen 9, 10, 11, 12, 13, 14, 15, 16, 17, 18 wirken also alle dem möglichen herauswandern der Lagerelemente 7 aus den Lagerkörpern 6 heraus entgegen.

## Patentansprüche

1. Aufhängungsvorrichtung an einer Landmaschine zu Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper und dem davon umgriffenen Abschnitt des Schwenkarmträgers zumindest ein elastisches Lagerelement vorgesehen ist, das sich mit seiner Längsachse im Wesentlichen parallel zu der Schwenkachse des Schwenkarmes und der Längsachse des Schwenkträgers erstreckt und durch Schwenkbewegungen des Schwenkarmes eine zumindest teilweise Verformung erfährt, **dadurch gekennzeichnet, dass** auf der Oberfläche des elastischen Lagerelementes (7) im Bereich des Lagerkörpers (6) zumindest eine Erhebung (9, 10, 11, 12, 13, 14, 15, 16, 17, 18) angeordnet ist.

2. Aufhängungsvorrichtung nach Anspruch 1, **dadurch gekennzeichnet, dass** die Erhebung (9, 11, 13, 15, 17) als zumindest eine ringförmige Erhebung (10, 12, 14, 16, 18) auf der Oberfläche des elastischen Lagerelementes (7) ausgebildet ist.

3. Aufhängungsvorrichtung nach zumindest einem der vorstehenden Ansprüche, **dadurch gekennzeichnet, dass** die ringförmige Erhebung (11) als zumindest ein auf dem Lagerelement (7) angeordnetes oder aufgeschobenes Ringelement, vorzugsweise O-Ring (12) ausgebildet ist.

4. Aufhängungsvorrichtung nach zumindest einem der Ansprüche 1 oder 2, **dadurch gekennzeichnet, dass** die ringförmige Erhebung (9, 11, 13, 15, 17) als mit dem Lagerelement (7) einstückig verbundenes und aus der Oberfläche des Lagerelementes (7) herausragendes Ringelement (10, 12, 14, 16, 18) ausgebildet ist.

5. Aufhängungsvorrichtung nach Anspruch 4, **dadurch gekennzeichnet, dass** eine Vielzahl von ringförmigen Erhebungen (15, 16) nebeneinander auf der Oberfläche des Lageelementes (7) angeordnet sind.

6. Aufhängungsvorrichtung nach Anspruch 1, **dadurch gekennzeichnet, dass** die Erhebungen auf der Oberfläche des Lagerelementes streifenförmig ausgebildet sind.

7. Aufhängungsvorrichtung nach Anspruch 1, **dadurch gekennzeichnet, dass** das die Erhebungen (18) auf der Oberfläche des Lagerelementes (7) punktartig ausgebildet sind.

8. Aufhängungsvorrichtung nach Anspruch 1, **dadurch gekennzeichnet, dass** das die Erhebungen (17) gitternetzartig ausgebildet sind.
